# EUROPEAN PATENT APPLICATION

(11) **EP 4 564 492 A1**
(43) Date of publication of application: **04.06.2025**
(21) Application number: 23307120.8
(22) Date of filing: 01.12.2023
(51) Int. Cl.: H01M 10/04, H01M 10/0525, H01M 10/058, H01M 50/103, H01M 50/131, H01M 50/209, H01M 50/249

(54) **ELECTROCHEMICAL CELL COMPRISING A DEFORMED CAN AND CORRESPONDING PRODUCTION METHOD**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

An electrochemical cell (12) comprising:
- a can (14) comprising at least two can faces (24),
- a cover (16) fixed to the can (14), the can (14) and the cover (16) defining an interior volume (18),
- a stack (22) extending between the two can faces (24) in a first transverse direction (T1), the interior volume (18) comprising a region (26) extending between the stack (22) and the cover (16) in a second transverse direction (T2).

Each of the two can faces (24) comprises a first portion (32) facing the stack (22) and defining a plane (P1, P2), and a second portion (34) facing the region (26.) and presenting a local deformation (40) in the first transverse direction (T1) towards the interior volume (18) with respect to the planes (P1, P2).

## Description

The present invention deals with an electrochemical cell.

The present invention also deals with a battery including at least such an electrochemical cell.

The invention also deals with a method for producing such an electrochemical cell for the fabrication of a battery, for a hybrid or an electric vehicle.

An electrochemical cell usually comprises, in particular, a plurality of positive electrodes intertwined with negative electrodes and electrolyte impregnated separators, known as a "stack" when they are cut in pieces, or as a "jelly roll" when they are continuously wound together. The positive electrodes are connected to each other and to a positive terminal of the electrochemical cell, and the negative electrodes are connected to each other and to a negative terminal of the electrochemical cell.

These elements are protected by a mechanically resistant envelope, such as a hard case, also known as a "can", or a soft pouch. A hard case is usually prismatic or cylindrical.

A battery usually includes a plurality of electrochemical cells electrically connected to each other. For example, the plurality of electrochemical cells are arranged in one or several modules and each module includes one or several electrochemical cells.

Batteries, in particular lithium-ion ones, are not compatible with water, therefore the can is completely sealed in order to prevent any moisture from entering the electrochemical cell. The can is hermetic and air tight.

Battery producers have found an anomaly of some batteries. Indeed, some electrical cells inside a battery seem to have a significant lower lifespan, compared to other electrochemical cells. This problem was unpredicted and the proportion of the electrochemical cells concerned engender complications.

An aim of the invention is to improve the lifespan of the electrochemical cell and to avoid anomalies of the electrochemical cell.

To this aim, the invention proposes an electrochemical cell comprising:
- a can comprising at least two can faces,
- a cover fixed to the can, the can and the cover defining an interior volume of the electrochemical cell, and
- a plurality of positive electrodes intertwined with a plurality of negative electrodes, and separators forming a stack extending between the two can faces in a first transverse direction of the electrochemical cell, the interior volume comprising a region extending between the stack and the cover in a second transverse direction perpendicular to the first transverse direction,

each of the two can faces comprises a first portion facing the stack and defining a plane, and a second portion facing the region,
wherein at least the second portion the two can faces presents a local deformation in the first transverse direction towards the interior volume with respect to the planes.

The electrochemical cell, according to the invention, allows having a more uniform pressure profile from the can walls on the stack, which avoids anomalies of the electrochemical cell and leads to a longer lifespan of the electrochemical cells.

In particular embodiments, the electrochemical cell according to the invention includes one or more of the following feature(s), taken alone, or according to any technical feasible combination:
- the plane defined by the second portion of one of the two can faces is parallel to the plane defined by the second portion of the other one of the two can faces;
- the deformation of one of the two can faces and the deformation of the other one of the two can faces are symmetrical to each other with respect to a plane;
- the deformation has a convexity turned towards the interior volume;
- the stack has a width in the first transverse direction, the deformation having a depth in the first transverse direction comprised between 3% and 6% of said width;
- the deformation of the two can faces is obtainable using two mirror-imaged face deform punches; and
- each of the two can faces applies a pressure on the stack along the first transverse direction, defining a pressure profile in the second transverse direction, the pressure profile being comprised in a range defined by a given value +/-20%, preferably +/- 10% and more preferably +/- 5 %.

The invention also proposes a battery system, in particular for a hybrid or electrical vehicle, including at least one cell as described above.

The invention also proposes a method for producing an electrochemical cell as described above, comprising the following steps:
- obtaining the can, the plurality of positive electrodes intertwined with a plurality of negative electrodes, and separators, and the cover;
- forming the stack and placing the stack in the interior volume between the two can faces in the first transverse direction;
- fixing the cover on the can; and
- deforming the second portion of the two can faces towards the interior volume with respect to the plane in order to obtain the deformation.

The invention will be better understood, based on the following description, given solely by way of example and with reference to the appended drawings, in which:
- Figure 1 is a schematic representation of a battery according to the invention;
- Figure 2 is a schematic cross-sectional view of an electrochemical cell of the battery show in Figure 1 at an intermediate stage of its production;
- Figure 3 is a cross-sectional view showing the deformation of the can faces; and
- Figure 4 is a partial cross sectional view of the electrochemical cell shown in figures 1 to 3, after deforming the can faces.

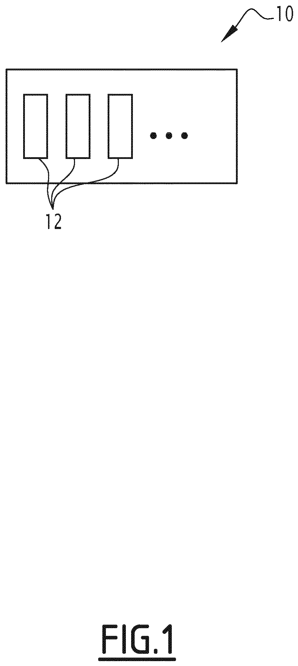

A battery 10 according to the invention will now be described with reference to Figure 1.

The battery 10 can be of any type. Advantageously, the battery 10 is a lithium ion battery. The battery 10 comprises several electrochemical cells 12 electrically connected together.

For example, the battery 10 can have several applications such as powering hybrid or electrical vehicles or storing solar energy collected by photovoltaic cells.

The electrochemical cells 12 are for example identical to each other. As a variant (not shown), only one electrochemical cell 12 is used for the battery 10. Therefore, only one electrochemical cell 12 will be described.

The electrochemical cell 12 comprises a can 14, and a cover 16 fixed to the can 14. The can 14 and the cover 16 define an interior volume 18 of the electrochemical cell 12.

The electrochemical cell 12 comprises a plurality of positive electrodes 20a intertwined with a plurality of negative electrodes 20b, and separators 20c forming a stack 22.

The electrochemical cell 12, for example, has a generally parallelepiped shape, adapted to allow the formation of a module or pack integrating a row of electrochemical cells electrically connected to each other. An example of such a module is given in Figure 1.

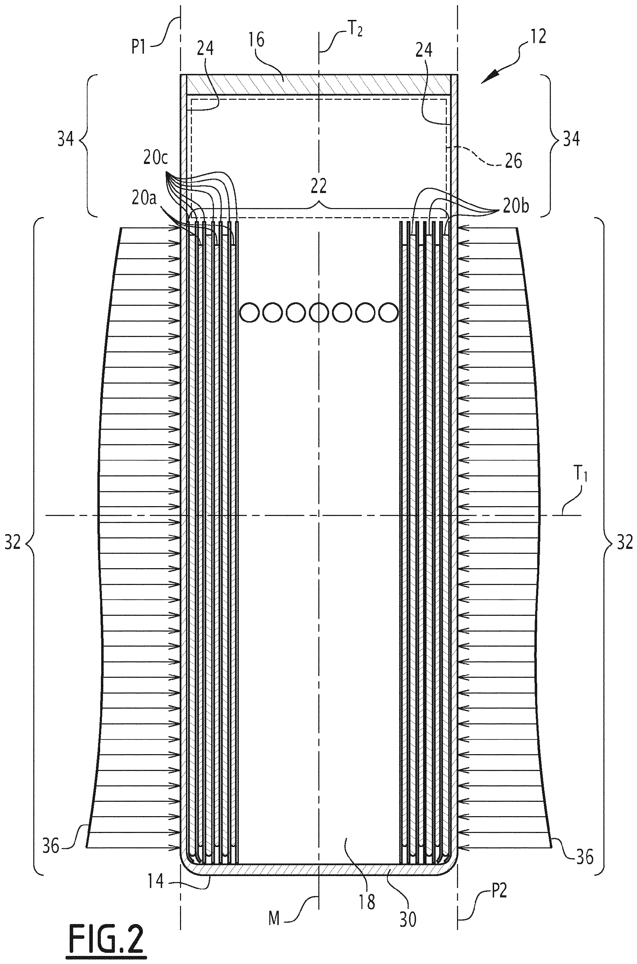

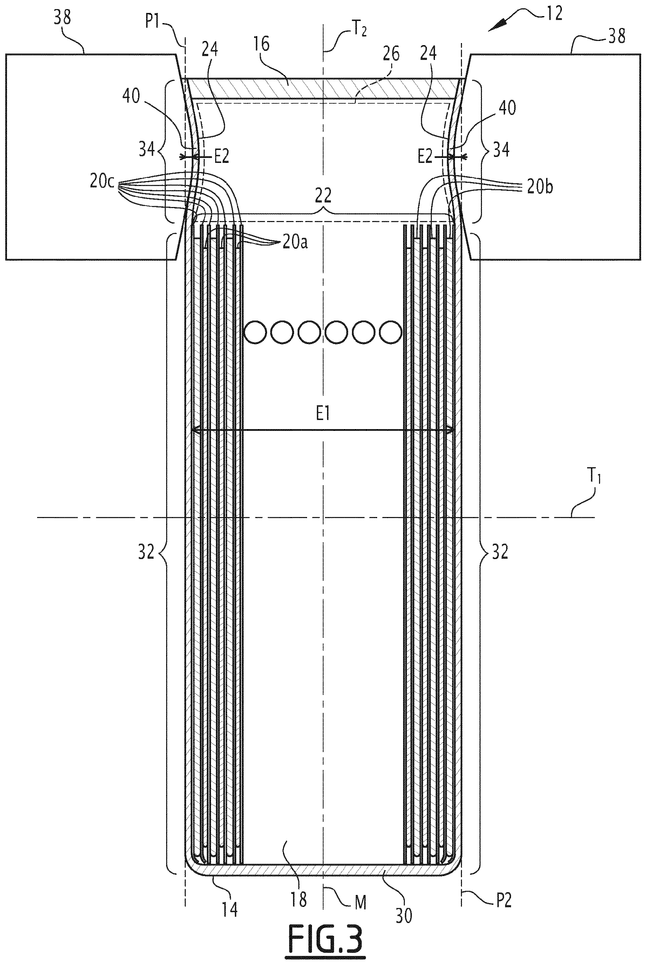

The can 14 is for example a hard case with a generally prismatic shape. The can 14 comprises two can faces 24, which are for example, the main faces of the can 14 (as shown in Figures 2 and 3). The can 14 also comprises two other can faces in order to form a rectangular prism. Preferably, the can 14 is made of aluminum or steel.

On the one hand, the can 14 is used to contain the stack 22 of the electrochemical cell 12, and on the other hand, to protect the stack 22 of the electrochemical cell 12 from external disturbances. For example, the can 14 can be manufactured through a stamping process, for example by a deep drawing or an impact extrusion.

The cover 16 includes two terminals (not shown) of the cell 12.

The stack 22 extends between two can faces 24 in a first transverse direction T1 of the electrochemical cell 12. Advantageously, the stack 22 has a width E1 in the first transverse direction T1, as shown in Figure 3.

The positive electrodes 20a are advantageously connected to each other and to a positive terminal (not shown) of the cell 12, and the negative electrodes 20b are advantageously connected to each other and to a negative terminal (not shown) of the cell 12.

For example, the electrodes 20a and 20b are generally made of metal oxides or phosphates. For example, graphite or lithium iron phosphate (LiFePO₄) can be used.

Each of the separators 20c is advantageously a porous membrane that prevents direct contact between the electrodes 20a, 20b, while allowing the passage of ions through an electrolyte (not shown).

The electrolyte is for example an electrochemically conductive substance that facilitates the transfer of ions between the electrodes. The electrolyte is for example composed of a mixture of organic solvents and a lithium salt. The choice of lithium salt and solvent depends on the desired operating temperature for the cell.

The interior volume 18 comprises a region 26 extending between the stack 22 and the cover 16 in a second transverse direction T2 perpendicular to the first transverse direction T1.

Each of the two can faces 24 comprises a first portion 32 facing the stack 22 and respectively defining a plane P1, P2, and a second portion 34 facing the region 26.

Each of the two can faces 24 applies a pressure on the stack 22 along the first transverse direction T1, defining a pressure profile 36 in the second transverse direction T2, the pressure profile 36 being comprised in a range defined by a given value +/- 20%, preferably +/- 10%, and more preferably +/- 5 %.

Advantageously, the plane P1 of the first portion 32 of one of the two faces 24 is parallel to the plane P2 of the first portion 32 of the other one of the two can faces 24. The plane P1 and P2 are for example perpendicular to the first transverse direction T1 of the electrochemical cell 12.

The second portion 34 of the two can faces 24 presents a local deformation 40 in the first transverse direction T1 towards the interior volume 18 with respect to the plane P1, P2.

As a variant (not shown), the first portion 32 also comprises a deformation that is next to the second portion 34 and near the region 26.

For example, the deformation 40 of one of the two can faces 24 and the deformation 40 of the other one of the two can faces 24 are symmetrical to each other with respect to a medium plane M of the electrochemical cell 12.

The deformation 40 advantageously has a convexity turned towards the interior volume 18. In other words, it means that, when observed externally, the deformation 40 is concave.

Besides, the deformation 40 advantageously has a depth E2 in the first transverse direction T1 comprised between 3% and 6% of said width E1.

For example, the deformation 40 is obtainable using two mirror-imaged face deform punches 38, as shown in Figure 3.

The plane M is advantageously parallel to the planes P1, P2 and parallel to the second transverse T2 direction of the electrochemical cell 12.

A method according to the invention for producing the electrochemical cell 12 will now be described.

The method for producing the electrochemical cell 12 comprises the following steps:
- obtaining the can 14,
- forming the stack 22 and placing the stack 22 in the interior volume 18,
- fixing the cover 16, and
- deforming the second portion 34 in order to obtain the deformation 40.

During the fixing step, the cover 16 is for example fixed on top of the can 14. For example, the cover 16 is secured by welding it to the can 14.

The deformation 40 is for example performed after fixing the cover 16 to the can 14, and before introducing the electrolyte into the interior volume 18.

For example, the deformation 40 is obtained using the two punches 38. However, the deformation 40 may be obtained in another manner.

Advantageously, the two punches 38 applies pressure in the first transverse direction T1 towards each other.

Thanks to the above described features, in particular the deformation 40, the stack 22 is under a more uniform and homogeneous compressive pressure condition. The lifespan of the electrochemical cell 12 is thus improved and the anomalies of the electrochemical cell 12 are avoided.

Indeed, without the deformation 40, the region 26 was a factor contributing to performance irregularities and rapid local degradation in the electrochemical cell 12, potentially resulting in a shortened lifespan.

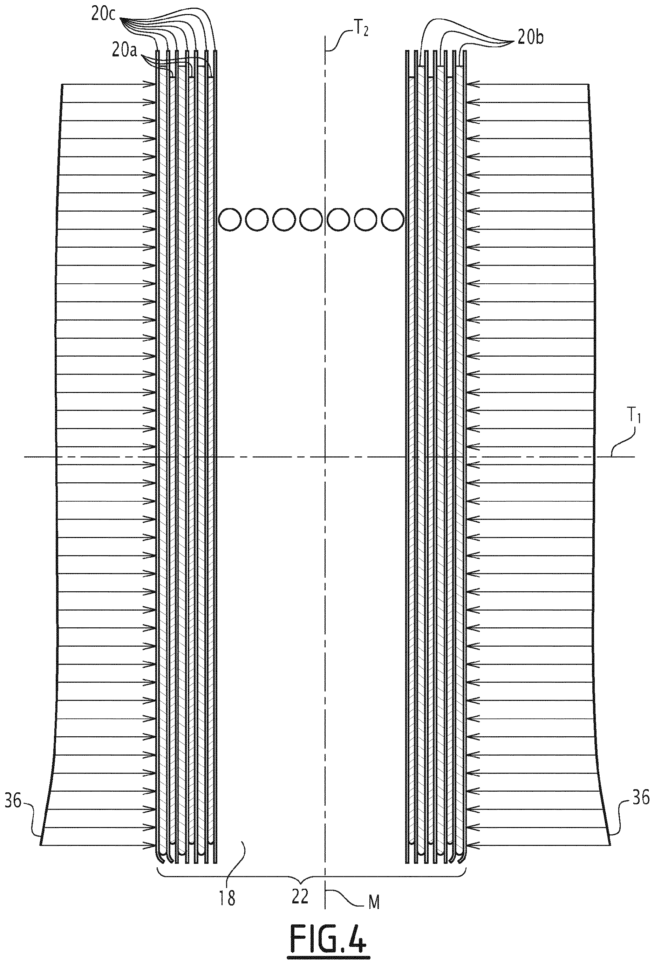

Thanks to the deformation 40, when the stack 22 tends to dilate during operation of the electrochemical cell 12, the stack 22 gets a more uniform pressure profile 36 avoiding or limiting the degradation of the electrochemical cell 12 (Figure 4) than without the deformation 40.

## Claims

1. An electrochemical cell (12) comprising:
- a can (14) comprising at least two can faces (24),
- a cover (16) fixed to the can (14), the can (14) and the cover (16) defining an interior volume (18) of the electrochemical cell (12), and
- a plurality of positive electrodes (20a) intertwined with a plurality of negative electrodes (20b), and separators (20c) forming a stack (22) extending between the two can faces (24) in a first transverse direction (T1) of the electrochemical cell (12), the interior volume (18) comprising a region (26) extending between the stack (22) and the cover (16) in a second transverse direction (T2) perpendicular to the first transverse direction (T1),
each of the two can faces (24) comprises a first portion (32) facing the stack (22) and defining a plane (P1, P2), and a second portion (34) facing the region (26),
**characterized in that** at least the second portion (34) the two can faces (24) presents a local deformation (40) in the first transverse direction (T1) towards the interior volume (18) with respect to the planes (P1, P2).

2. The electrochemical cell (12) according to claim 1, wherein the plane (P1) defined by the second portion (34) of one of the two can faces (24) is parallel to the plane (P2) defined by the second portion (34) of the other one of the two can faces (24).

3. The electrochemical cell (12) according to claim 1 or 2, wherein the deformation of one of the two can faces (24) and the deformation of the other one of the two can faces (24) are symmetrical to each other with respect to a plane (M).

4. The electrochemical cell (12) according to any one of claims 1 to 3, wherein the deformation has a convexity turned towards the interior volume (18).

5. The electrochemical cell (12) according to claim 4, wherein the stack (22) has a width (E1) in the first transverse direction (T1), the deformation (40) having a depth (E2) in the first transverse direction (T1) comprised between 3% and 6% of said width (E1).

6. The electrochemical cell (12) according to any one of claims 1 to 5, wherein the deformation of the two can faces (24) is obtainable using two mirror-imaged face deform punches (38).

7. The electrochemical cell (12) according to any one of claims 1 to 6, wherein each of the two can faces (24) applies a pressure on the stack (22) along the first transverse direction (T1), defining a pressure profile (36) in the second transverse direction (T2), the pressure profile (36) being comprised in a range defined by a given value +/-20%, preferably +/- 10% and more preferably +/- 5 %.

8. A battery (10) system, in particular for a hybrid or electrical vehicle, including at least one cell (12) as described by any one of claims 1 to 7.

9. A method for producing an electrochemical cell (12) as described by any of the claims 1 to 7, comprising the following steps:
- obtaining the can (14), the plurality of positive electrodes (20a) intertwined with a plurality of negative electrodes (20b), and separators (20c), and the cover (16);
- forming the stack (22) and placing the stack (22) in the interior volume (18) between the two can faces (24) in the first transverse direction (T1);
- fixing the cover (16) on the can (14); and
- deforming the second portion (34) of the two can faces (24) towards the interior volume (18) with respect to the plane (P1, P2) in order to obtain the deformation (40).
